# EUROPÄISCHE PATENTSCHRIFT

(11) **EP 2 823 740 B1**
(45) Veröffentlichungstag und Bekanntmachung des Hinweises auf die Patenterteilung: **28.02.2018**
(21) Anmeldenummer: 14175865.6
(22) Anmeldetag: 04.07.2014
(51) Int. Cl.: H05B 6/12, A47J 27/62, A47J 36/32, A47J 45/07

(54) **Kochfeldvorrichtung**
Hotplate device
Dispositif de plaque de cuisson

(30) Priorität: 12.07.2013 ES 201331064
(43) Veröffentlichungstag der Anmeldung: 14.01.2015
(73) Patentinhaber: BSH Hausgeräte GmbH, 81739 München (DE)
(72) Erfinder: Llorente Gil, Sergio, 50009 Zaragoza (ES); Martin Gomez, Damaso, 20012 Zaragoza (ES); Mir Bel, Jorge, 50019 Zaragoza (ES)

(56) Entgegenhaltungen:
- EP-A1- 1 591 049
- WO-A1-2010/080738
- WO-A1-2013/007953
- WO-A2-2004/008923
- DE-A1- 4 439 777
- DE-U1- 20 318 327

## Beschreibung

Die Erfindung betrifft eine Kochfeldvorrichtung nach dem Patentanspruch 1 und ein Verfahren zum Betrieb einer Kochfeldeinrichtung nach dem Patentanspruch 10. Die EP 1 591 049 A1 zeigt eine Kochfeldvorrichtung nach dem Oberbegriff des Anspruchs 1.

Die Aufgabe der Erfindung besteht insbesondere darin, eine gattungsgemäße Vorrichtung mit verbesserten Eigenschaften hinsichtlich eines hohen Komforts für einen Bediener und/oder einer hohen Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Es wird eine Kochfeldvorrichtung mit zumindest einem Gargeschirrhandgriff, der dazu vorgesehen ist, in zumindest einem Betriebszustand abnehmbar, insbesondere abnehmbar und wieder verwendbar, an zumindest einem Gargeschirr befestigt zu sein und der zumindest eine Sensoreinheit zumindest zu einer Detektion einer Garkenngröße des Gargeschirrs umfasst, vorgeschlagen. Unter einem "Gargeschirrhandgriff" soll insbesondere eine Einheit verstanden werden, die dazu vorgesehen ist, in zumindest einem, insbesondere jedem Betriebszustand einen Transport zumindest eines Gargeschirrs, an dem der Gargeschirrhandgriff zumindest in befestigtem Zustand abnehmbar befestigt ist, durch einen Bediener zu ermöglichen. Insbesondere umfasst der Gargeschirrhandgriff zumindest ein Trägerbauteil, das dazu vorgesehen ist, zumindest eine Gewichtskraft weiterer Bauteile, insbesondere der Sensoreinheit und/oder einer Auswerteeinheit, zumindest teilweise zu tragen und/oder zu halten. Insbesondere ist das Trägerbauteil dazu vorgesehen, zumindest eine Gestalt und/oder Form des Gargeschirrhandgriffs zu definieren. Insbesondere ist das Trägerbauteil zumindest im Wesentlichen einstückig mit einem Handgriffgehäuse ausgebildet. Alternativ ist denkbar, dass der Gargeschirrhandgriff zumindest ein Handgriffgehäuse aufweist, das das Trägerbauteil zumindest teilweise umgibt. Insbesondere ist das Trägerbauteil zumindest teilweise aus einem Material mit geringer Wärmeleitfähigkeit ausgebildet. Insbesondere ist das Trägerbauteil zumindest teilweise aus Kunststoff ausgebildet. Beispielsweise könnte das Trägerbauteil aus Silikon, Teflon und/oder Aramid ausgebildet sein. Ebenfalls denkbar ist, dass das Trägerbauteil zumindest teilweise aus Holz und/oder Keramik ausgebildet ist. Alternativ sind weitere, einem Fachmann als sinnvoll erscheinende Materialien denkbar. Insbesondere umfasst der Gargeschirrhandgriff zumindest ein Kontaktelement, das zumindest in befestigtem Zustand an dem Trägerbauteil angeordnet und dazu vorgesehen ist, zumindest eine Verbindung zwischen dem Trägerbauteil und zumindest einem Gargeschirr, an dem der Gargeschirrhandgriff zumindest in befestigtem Zustand abnehmbar befestigt ist, herzustellen und/oder auszubilden. Insbesondere umgreift das Kontaktelement zumindest eine Krempe, insbesondere eine Kante, des Gargeschirrs zumindest teilweise. Insbesondere ist das Kontaktelement an dem Trägerbauteil befestigt, beispielsweise durch eine Klebeverbindung. Alternativ könnte das Kontaktelement an dem Trägerbauteil mittels zumindest einer Schraubverbindung und/oder zumindest einer Rastverbindung und/oder zumindest einer Klemmverbindung befestigt sein. Zudem sind weitere, einem Fachmann als sinnvoll erscheinende Verbindungsarten denkbar. Insbesondere ist das Kontaktelement zumindest im Wesentlichen elastisch ausgebildet. Insbesondere ist das Kontaktelement zumindest teilweise aus Gummi ausgebildet. Alternativ oder zusätzlich könnte das Kontaktelement zumindest teilweise aus Metall und/oder Silikon und/oder Kunststoff ausgebildet sein. Ebenfalls denkbar sind weitere, einem Fachmann als sinnvoll erscheinende Materialien. Unter der Wendung, dass der Gargeschirrhandgriff dazu vorgesehen ist, in zumindest einem Betriebszustand "abnehmbar" an zumindest einem Gargeschirr befestigt zu sein, soll insbesondere verstanden werden, dass der Gargeschirrhandgriff dazu vorgesehen ist, in zumindest einem Betriebszustand werkzeuglos trennbar und/oder insbesondere zerstörungsfrei trennbar an zumindest einem Gargeschirr befestigt zu sein. Insbesondere ist der Gargeschirrhandgriff dazu vorgesehen, in zumindest einem ersten Betriebszustand an zumindest einem ersten Gargeschirr und in zumindest einem zweiten Betriebszustand an zumindest einem zweiten Gargeschirr, das insbesondere von dem ersten Gargeschirr getrennt ausgebildet ist, befestigt zu sein. Insbesondere ist der Gargeschirrhandgriff dazu vorgesehen, in zumindest einem Betriebszustand mittels zumindest einer Klemmverbindung und/oder zumindest einer Rastverbindung an dem Gargeschirr befestigt zu sein. Ebenfalls denkbar ist zumindest eine magnetische Verbindung und/oder eine Verbindung mittels Saug-Knöpfen und/oder mittels zumindest einer Feder. Alternativ sind weitere, einem Fachmann als sinnvoll erscheinende Befestigungsmöglichkeiten denkbar. Unter einer "Sensoreinheit" soll insbesondere eine Einheit mit zumindest einem Sensorelement zu einer Detektion zumindest einer Garkenngröße des Gargeschirrs verstanden werden. Es sind verschiedene, einem Fachmann als sinnvoll erscheinende Sensorelemente denkbar. Beispielsweise könnte das Sensorelement als ein Drucksensor zu einer Detektion eines Drucks in dem Gargeschirr und/oder als ein Akustiksensor zu einer Detektion eines Siedezustands einer sich in dem Gargeschirr befindlichen Flüssigkeit und/oder als ein spektrometrischer Sensor zu einer Detektion zumindest eines chemischen Parameters ausgebildet sein. Insbesondere ist das Sensorelement zumindest teilweise als Infrarotsensor und/oder als Kontaktsensor ausbildet. Unter einem "Infrarotsensor" soll insbesondere eine Einheit zu einer berührungslosen Detektion der Garkenngröße verstanden werden, die dazu vorgesehen ist, zumindest eine von dem Gargeschirr und/oder von einem in dem Gargeschirr befindlichen Gargut emittierte Strahlung, insbesondere Infrarotstrahlung, zu detektieren. Insbesondere ist der Infrarotsensor dazu vorgesehen, zumindest eine Intensität von Infrarotstrahlung zu detektieren und/oder insbesondere zumindest eine Frequenz und/oder Wellenlänge eines Intensitätsmaximums der Infrarotstrahlung zu detektieren. Unter "Infrarotstrahlung" soll insbesondere elektromagnetische Strahlung aus einem Wellenlängenbereich von 780 nm bis 1 mm verstanden werden. Unter einem "Kontaktsensor" soll insbesondere eine Einheit verstanden werden, die in zumindest einem Betriebszustand in einem direkten Kontakt mit dem Gargeschirr, insbesondere mit einer Wand des Gargeschirrs, angeordnet und dazu vorgesehen ist, durch Änderung zumindest eines Parameters, beispielsweise einer elektrischen Spannung und/oder einer Frequenz, vorteilhaft eines Widerstands, die Garkenngröße zu detektieren. Beispielsweise könnte der Kontaktsensor als PT100 ausgebildet sein. Alternativ sind weitere, einem Fachmann als sinnvoll erscheinende Ausgestaltungen denkbar. Insbesondere spiegelt die Garkenngröße eine Temperatur wider. Alternativ könnte die Garkenngröße eine Höhe, bis zu welchem das Gargeschirr mit Gargut gefüllt ist, und/oder einen Garzustand eines sich in dem Gargeschirr befindlichen Garguts widerspiegeln. Ebenfalls denkbar sind weitere, einem Fachmann als sinnvoll erscheinende Garkenngrößen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort für einen Bediener und/oder eine hohe Flexibilität erreicht werden. Insbesondere kann eine flexible Anwendung des Gargeschirrhandgriffs an zumindest zwei, insbesondere mehreren Gargeschirren erreicht werden. Zudem kann insbesondere eine kostengünstige Ausgestaltung erreicht werden. Durch Detektion der Garkenngröße kann vorteilhaft ein hoher Komfort für einen Bediener erreicht werden. Erfindungsgemäß wird vorgeschlagen, dass die Sensoreinheit zumindest ein verstellbares Sensorelement zu einer Einstellung von zumindest zwei, insbesondere zumindest vier, vorteilhaft zumindest acht, vorzugsweise zumindest zwölf, besonders bevorzugt einer Vielzahl, verschiedenen Messpositionen aufweist. Unter einem "verstellbaren" Sensorelement soll insbesondere ein beweglich an dem Gargeschirrhandgriff angeordnetes Sensorelement verstanden werden, das dazu vorgesehen ist, in zumindest einem ersten Betriebszustand eine erste Messposition einzunehmen und in zumindest einem zweiten Betriebszustand eine zweite Messposition, die insbesondere von der ersten Messposition verschieden ausgebildet ist, einzunehmen. Insbesondere ist das verstellbare Sensorelement dazu vorgesehen, von einem Bediener in zumindest eine Messposition eingestellt und/oder zwischen zumindest zwei verschiedenen Messpositionen verstellt zu werden. Alternativ könnte die Sensoreinheit und/oder der Gargeschirrhandgriff zumindest ein elektrisches und/oder mechanisches Bauteil zu einer Einstellung und/oder einer Veränderung der Messpositionen des verstellbaren Sensorelements aufweisen. Dadurch kann insbesondere eine flexible und/oder komfortable Ausgestaltung erreicht werden.
Zudem wird vorgeschlagen, dass der Gargeschirrhandgriff zumindest eine Auswerteeinheit zu einer Auswertung der von der Sensoreinheit detektierten Garkenngröße aufweist. Unter einer "Auswerteeinheit" soll insbesondere eine elektronische Einheit verstanden werden, die zumindest eine Recheneinheit und insbesondere zusätzlich zur Recheneinheit eine Speichereinheit mit einem darin gespeicherten Auswerteprogramm, das dazu vorgesehen ist, von der Recheneinheit ausgeführt zu werden, umfasst. Insbesondere ist die Auswerteeinheit von einer Kochfeld-Steuereinheit getrennt ausgebildet. Insbesondere ist die Auswerteeinheit dazu vorgesehen, die von der Sensoreinheit detektierte Garkenngröße unabhängig von einer Kochfeld-Steuereinheit auszuwerten. Insbesondere ist die Auswerteeinheit zumindest größtenteils, insbesondere komplett, innerhalb des Trägerbauteils angeordnet. Alternativ ist denkbar, dass die Auswerteeinheit zumindest teilweise in der Kochfeld-Steuereinheit integriert ist, wobei die Garkenngröße von der Sensoreinheit an die Auswerteeinheit übertragen wird. Dadurch kann insbesondere eine eigenständige und/oder flexible Ausgestaltung erreicht werden. Zudem kann vorteilhaft eine platzsparende Anordnung der Auswerteeinheit erreicht werden.

Weiterhin wird vorgeschlagen, dass die Auswerteeinheit zu einer Kommunikation mit zumindest einer Kochfeld-Steuereinheit vorgesehen ist. Insbesondere weist die Kochfeldvorrichtung die Kochfeld-Steuereinheit auf. Alternativ ist denkbar, dass die Kochfeld-Steuereinheit zumindest teilweise in einem Kochfeld integriert ist. Insbesondere weist das Kontaktmodul zumindest ein Sendemodul zumindest zu einer Übertragung zumindest eines Befehls an die Kochfeld-Steuereinheit auf. Insbesondere ist die Auswerteeinheit dazu vorgesehen, mittels des Sendemoduls den Befehl an die Kochfeld-Steuereinheit zu übertragen. Insbesondere umfasst die Kochfeld-Steuereinheit zumindest ein Empfangsmodul zu einem Empfang des von dem Sendemodul übertragenen Befehls. Insbesondere ist die Auswerteeinheit dazu vorgesehen, in Abhängigkeit von der Garkenngröße zumindest einen Befehl zu einer Änderung einer Heizleistungsdichte zumindest einer Heizeinheit, mit der das Gargeschirr beheizt wird, an die Kochfeld-Steuereinheit zu übertragen. Insbesondere ist die Kochfeld-Steuereinheit dazu vorgesehen, in Abhängigkeit von dem Befehl der Auswerteeinheit eine Heizleistungsdichte zumindest einer Heizeinheit, mit der das Gargeschirr beheizt wird, und damit die Temperatur des Gargeschirrs zu regulieren. Dadurch kann insbesondere ein Garprozess überwacht werden, wodurch ein hohes Maß an Komfort für einen Bediener erreicht werden kann.

Ferner wird vorgeschlagen, dass das verstellbare Sensorelement zumindest teilweise als Infrarotsensor ausgebildet ist. Unter der Wendung, dass das verstellbare Sensorelement "zumindest teilweise" als Infrarotsensor ausgebildet ist, soll insbesondere verstanden werden, dass das verstellbare Sensorelement zumindest einen Infrarotsensor aufweist und zusätzlich zu dem Infrarotsensor weitere Sensoren, beispielsweise einen Drucksensor und/oder einen Kontaktsensor und/oder einen akustischen Sensor und/oder einen spektrometrischen Sensor, aufweisen könnte. Dadurch kann insbesondere eine platzsparende Ausgestaltung erreicht werden.

Zudem wird vorgeschlagen, dass das verstellbare Sensorelement zumindest teilweise als Kontaktsensor ausgebildet ist. Unter der Wendung, dass das verstellbare Sensorelement "zumindest teilweise" als Kontaktsensor ausgebildet ist, soll insbesondere verstanden werden, dass das verstellbare Sensorelement zumindest einen Kontaktsensor aufweist und zusätzlich zu dem Kontaktsensor weitere Sensoren, beispielsweise einen Drucksensor und/oder einen Infrarotsensor und/oder einen akustischen Sensor und/oder einen spektrometrischen Sensor, aufweisen könnte. Dadurch kann insbesondere eine präzise Detektion der Garkenngröße erreicht werden.

Weiterhin wird vorgeschlagen, dass das verstellbare Sensorelement zumindest teilweise aus zumindest einem Trägerbauteil des Gargeschirrhandgriffs, insbesondere des Trägerbauteils und/oder des Gargeschirrhandgriffs, herausragt. Insbesondere sind das Sensorelement und das Trägerbauteil beabstandet angeordnet. Insbesondere weisen das Sensorelement und das Trägerbauteil einen kleinsten Abstand von mehr als 0,2 cm, insbesondere von mehr als 0,5 cm, vorteilhaft von mehr als 1 cm, vorzugsweise von mehr als 1,5 cm, insbesondere von mehr als 3 cm, auf. Insbesondere weist die Sensoreinheit zumindest ein Verbindungselement auf, das dazu vorgesehen ist, das verstellbare Sensorelement mit dem Trägerbauteil zu verbinden. Insbesondere ist das verstellbare Sensorelement zumindest teilweise, vorteilhaft größtenteils, vorzugsweise komplett, an dem Verbindungselement angeordnet, insbesondere befestigt. Insbesondere ist das Verbindungselement aus zumindest einem zumindest im Wesentlichen stabilen und/oder flexiblen Material ausgebildet. Beispielsweise ist das Verbindungselement aus Stahl und/oder Kunststoff und/oder Silikon ausgebildet. Alternativ sind weitere, einem Fachmann als sinnvoll erscheinende Materialien denkbar. Insbesondere umfasst das Verbindungselement zumindest ein Übertragungselement, insbesondere zumindest einen elektrischen Draht, vorteilhaft zumindest ein Sendemodul, zu einer Übertragung der Garkenngröße an die Auswerteeinheit, die vorzugsweise innerhalb des Trägerbauteils angeordnet ist. Alternativ zu einer Ausgestaltung mittels des Verbindungselements ist eine teleskopartige Ausgestaltung denkbar, bei dem die Sensoreinheit mehrere konzentrisch und relativ zueinander beweglich angeordnete Bauteile umfasst, reversibel ausgezogen und eingefahren werden können. Unter der Wendung, dass das verstellbare Sensorelement "zumindest teilweise" aus zumindest einem Trägerbauteil des Gargeschirrhandgriffs herausragt, soll insbesondere verstanden werden, dass das verstellbare Sensorelement zu einem Massenanteil und/oder Volumenanteil von mehr als 70 %, insbesondere von mehr als 80 % und vorteilhaft von mehr als 90 % aus dem Trägerbauteil des Gargeschirrhandgriffs herausragt. Unter der Wendung, dass das verstellbare Sensorelement zumindest teilweise aus zumindest einem Trägerbauteil des Gargeschirrhandgriffs "herausragt", soll insbesondere verstanden werden, dass das verstellbare Sensorelement über das Trägerbauteil übersteht. Insbesondere ist das verstellbare Sensorelement von einem Bediener frei berührbar angeordnet. Insbesondere weisen ein von dem Gargeschirrhandgriff in Anspruch genommener Raum und ein von dem verstellbaren Sensorelement in Anspruch genommener Raum eine Schnittmenge von weniger als 15 %, insbesondere von weniger als 10 % und vorteilhaft von weniger als 5 % eines kleinsten der in Anspruch genommenen Räume auf. Dadurch kann insbesondere eine flexible und/oder bedarfsgerechte Anordnung des Sensorelements erreicht werden.

Ferner wird vorgeschlagen, dass die Kochfeldvorrichtung zumindest eine Getriebeeinheit zu einer Übertragung einer Einstellkraft in eine Bewegung des verstellbaren Sensorelements aufweist. Insbesondere umfasst die Getriebeeinheit zumindest ein mechanisches Getriebe, insbesondere zumindest ein Zahnrad, das dazu vorgesehen ist, die Einstellkraft in eine Bewegung des Verbindungselements und damit des an dem Verbindungselement angeordneten verstellbaren Sensorelements zu übertragen. Insbesondere greift das mechanische Getriebe in zumindest eine Ausnehmung des Verbindungselements ein. Insbesondere wird die Einstellkraft zu einer Einstellung von dem Bediener aufgebracht. Alternativ ist denkbar, dass die Kochfeldvorrichtung zumindest eine Antriebseinheit aufweist, die insbesondere innerhalb des Gargeschirrhandgriffs, vorzugsweise innerhalb des Trägerbauteils, angeordnet und zu einer Erzeugung der Einstellkraft vorgesehen ist. Beispielsweise könnte die Antriebseinheit als ein elektrischer Motor ausgebildet sein. Dadurch kann insbesondere eine präzise Einstellung des verstellbaren Sensorelements erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld mit einer erfindungsgemäßen Kochfeldvorrichtung in einer perspektivischen Darstellung,
- Fig. 2: einen Ausschnitt eines Gargeschirrs mit der erfindungsgemäßen Kochfeldvorrichtung aus Fig. 1 in zwei verschiedenen Montagestellungen relativ zu dem Gargeschirr,
- Fig. 3: einen Ausschnitt eines Gargeschirrs mit der erfindungsgemäßen Kochfeldvorrichtung in einer schematischen Seitenansicht,
- Fig. 4: einen Ausschnitt eines Gargeschirrs mit einem weiteren Ausführungsbeispiel einer erfindungsgemäßen Kochfeldvorrichtung in einer ersten Stellung in einer schematischen Seitenansicht und
- Fig. 5: den Ausschnitt des Gargeschirrs mit der erfindungsgemäßen Kochfeldvorrichtung aus Fig. 4 in einer zweiten Stellung in einer schematischen Seitenansicht.

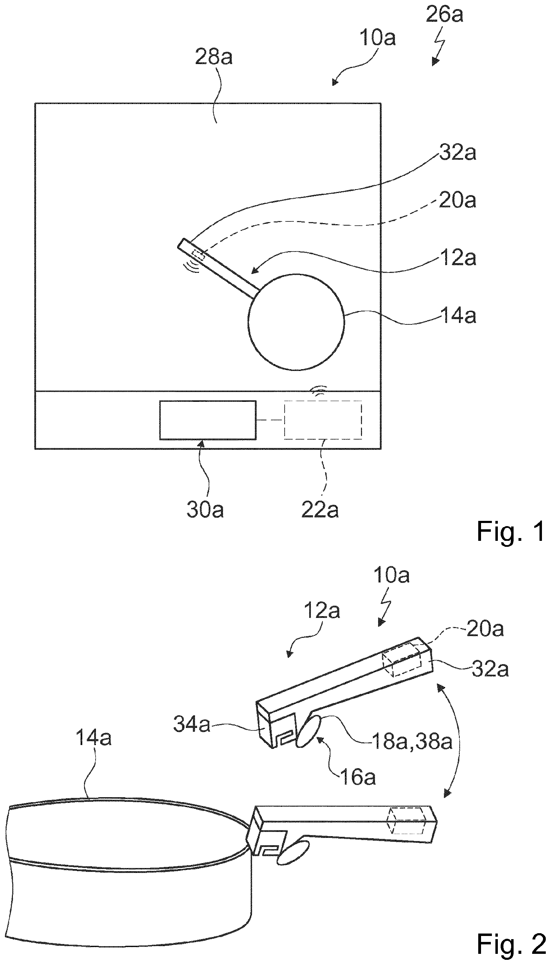

Fig. 1 zeigt ein erfindungsgemäßes Kochfeld 26a, das als ein Induktionskochfeld ausgebildet ist, mit einer erfindungsgemäßen Kochfeldvorrichtung 10a, die als eine Induktionskochfeldvorrichtung ausgebildet ist. Das Kochfeld 26a weist eine Platteneinheit 28a zu einem Aufstellen von Gargeschirren 14a auf. Die Platteneinheit 28a ist als eine Kochfeldplatte ausgebildet. Das Kochfeld 26a weist mehrere Heizeinheiten (nicht dargestellt) auf, die unterhalb der Platteneinheit 28a angeordnet sind. Die Heizeinheiten, die als Induktionsheizeinheiten ausgebildet sind, sind jeweils dazu vorgesehen, ein auf der Platteneinheit 28a oberhalb einer der Heizeinheiten aufgestelltes Gargeschirr 14a zu erhitzen. Das Kochfeld 26a weist in einem in eingebautem Zustand einem Bediener zuweisenden Bereich eine Bedieneinheit 30a zu einer Eingabe von Betriebsparametern auf. Beispielsweise sind die Betriebsparameter als Auswahl und/oder Veränderung einer Heizzone und/oder als eine Einstellung einer Heizleistung und/oder Heizleistungsdichte einer Heizzone ausgebildet. Die Kochfeldvorrichtung 10a weist eine Kochfeld-Steuereinheit 22a auf, die dazu vorgesehen ist, in Abhängigkeit der mittels der Bedieneinheit 30a eingegebenen Betriebsparameter Aktionen auszuführen und/oder Einstellungen zu verändern.

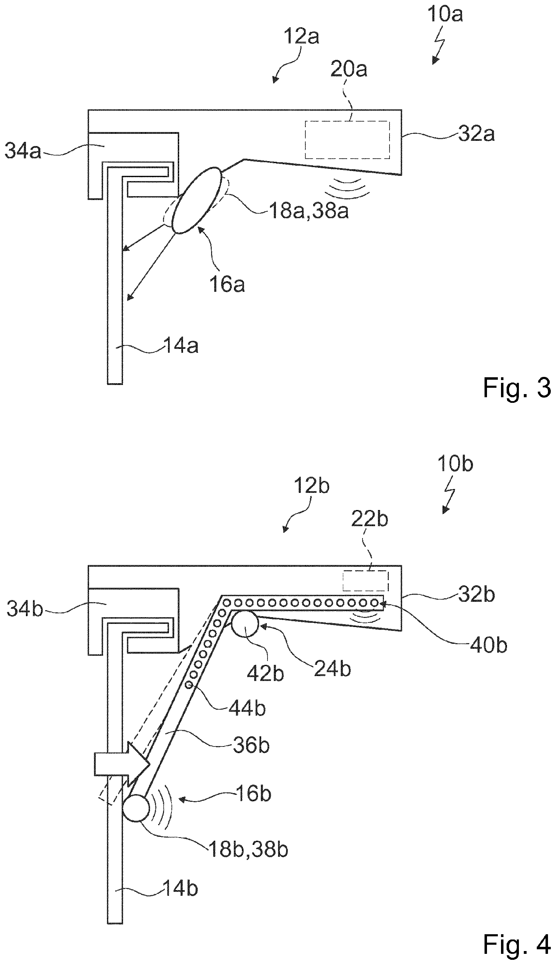

Die Kochfeldvorrichtung 10a umfasst einen Gargeschirrhandgriff 12a, der dazu vorgesehen ist, in einem Betriebszustand abnehmbar an einem Gargeschirr 14a befestigt zu sein (vgl. Fig. 2). Der Gargeschirrhandgriff 12a weist ein Trägerbauteil 32a und ein Kontaktelement 34a auf, das an dem Trägerbauteil 32a befestigt ist (vgl. Fig. 3). Das Kontaktelement 34a ist an dem Trägerbauteil 32a durch eine Klebeverbindung befestigt.

Das Kontaktelement 34a ist im Wesentlichen aus Gummi ausgebildet. Das Kontaktelement 34a ist in befestigtem Zustand dazu vorgesehen, eine Verbindung zwischen dem Trägerbauteil 32a und dem Gargeschirr 14a, an dem der Gargeschirrhandgriff 12a in befestigtem Zustand abnehmbar befestigt ist, herzustellen. Das Trägerbauteil 32a ist im Wesentlichen aus Kunststoff mit geringer Wärmeleitfähigkeit ausgebildet.

Der Gargeschirrhandgriff 12a umfasst eine Sensoreinheit 16a zu einer Detektion einer Garkenngröße des Gargeschirrs 14a. Die Garkenngröße spiegelt eine Temperatur des Gargeschirrs 14a wider. Die Sensoreinheit 16a weist ein verstellbares Sensorelement 18a zu einer Einstellung von zwei verschiedenen Messpositionen auf. Alternativ ist eine weitere, einem Fachmann als sinnvoll erscheinende Anzahl an Messpositionen denkbar. Das verstellbare Sensorelement 18a ist an dem Gargeschirrhandgriff 12a angeordnet. Hierbei ist das verstellbare Sensorelement 18a in einem direkten Kontakt mit dem Trägerbauteil 32a an dem Gargeschirrhandgriff 12a. Das verstellbare Sensorelement 18a ist in befestigtem Zustand an einer Außenwand des Trägerbauteils 32a in einem dem Gargeschirr 14a zuweisenden Bereich angeordnet. Das verstellbare Sensorelement 18a ragt teilweise aus dem Trägerbauteil 32a des Gargeschirrhandgriffs 12a heraus. Das verstellbare Sensorelement 18a ist an dem Trägerbauteil 32a schwenkbar relativ zu dem Trägerbauteil 32a befestigt, wodurch die verschiedenen Messpositionen einstellbar sind. Durch die schwenkbare Lagerung des verstellbaren Sensorelements 18a ist eine Ausrichtung des verstellbaren Sensorelements 18a relativ zu dem Gargeschirr 14a in befestigtem Zustand einstellbar, wodurch eine Messposition des verstellbaren Sensorelements 18a an eine Geometrie eines Gargeschirrs 14a anpassbar ist. Der Gargeschirrhandgriff 12a mit dem verstellbaren Sensorelement 18a kann abwechselnd an verschiedenen Gargeschirren 14a verwendet werden.

Das verstellbare Sensorelement 18a ist dazu vorgesehen, von einem Bediener manuell verstellt zu werden. Der Bediener bewegt das verstellbare Sensorelement 18a zwischen den verschiedenen Messpositionen, bis das verstellbare Sensorelement 18a in einer gewünschten Messposition angeordnet ist. Die Kochfeldvorrichtung 10a umfasst eine Rasteinheit (nicht dargestellt), die dazu vorgesehen ist, das verstellbare Sensorelement 18a in den verschiedenen Messpositionen zu verrasten. Die Rasteinheit verrastet das verstellbare Sensorelement 18a in der von dem Bediener eingestellten Messposition, wodurch eine Ausrichtung des verstellbaren Sensorelements 18a relativ zu dem Gargeschirr 14a festgelegt ist. Alternativ oder zusätzlich ist denkbar, dass die Kochfeldvorrichtung eine Getriebeeinheit umfasst, die zu einer Übertragung einer Einstellkraft in eine Bewegung des verstellbaren Sensorelements vorgesehen ist. Ebenfalls denkbar ist, dass die Getriebeeinheit im Wesentlichen einstückig mit der Rasteinheit ausgebildet und dazu vorgesehen ist, das verstellbare Sensorelement in den verschiedenen Messpositionen zu verrasten. Das verstellbare Sensorelement 18a, das teilweise als Infrarotsensor ausgebildet ist, ist dazu vorgesehen, eine von dem Gargeschirr 14a emittierte Infrarotstrahlung zu detektieren. Aus der von dem verstellbaren Sensorelement 18a detektierten Infrarotstrahlung ermittelt das verstellbare Sensorelement 18a die eine Temperatur widerspiegelnde Garkenngröße.

Der Gargeschirrhandgriff 12a weist eine Auswerteeinheit 20a zu einer Auswertung der von der Sensoreinheit 16a detektierten Garkenngröße auf. Die Auswerteeinheit 20a ist in dem Trägerbauteil 32a des Gargeschirrhandgriffs 12a angeordnet. Die Auswerteeinheit 20a weist ein Empfangsmodul auf, das dazu vorgesehen ist, die von dem verstellbaren Sensorelement 18a detektierte Garkenngröße zu empfangen. Das verstellbare Sensorelement 18a weist ein Übertragungselement 38a zu einer Übertragung der Garkenngröße an die Auswerteeinheit 20a auf. Das Übertragungselement 38a ist als ein Sendemodul ausgebildet und zu einer drahtlosen Übermittlung der Garkenngröße vorgesehen. Die Auswerteeinheit 20a, die zu einer Kommunikation mit der Kochfeld-Steuereinheit 22a vorgesehen ist, weist ein Sendemodul zu einer Übermittlung von Befehlen an die Kochfeld-Steuereinheit 22a auf. Die Sensoreinheit 16a ist dazu vorgesehen, eine ordnungsgemäße Befestigung des Gargeschirrhandgriffs 12a an dem Gargeschirr 14a zu detektieren und an die Auswerteeinheit 20a zu übermitteln. Die Auswerteeinheit 20a ist dazu vorgesehen, im Falle einer ordnungsgemäßen Befestigung eine Kommunikation mit der Kochfeld-Steuereinheit 22a zu starten.

In einem Verfahren zu einem Betrieb der Kochfeldvorrichtung 10a wird der Gargeschirrhandgriff 12a abnehmbar an dem Gargeschirr 14a befestigt. In einem Betriebszustand, in dem das Gargeschirr 14a beheizt wird, detektiert das verstellbare Sensorelement 18a in regelmäßigen zeitlichen Intervallen, beispielsweise im Sekundentakt, die Garkenngröße. Die Sensoreinheit 16a übermittelt die Garkenngröße an die Auswerteeinheit 20a, die nach einer Auswertung der von der Sensoreinheit 16a übermittelten Garkenngröße Befehle an die Kochfeld-Steuereinheit 22a überträgt. In Abhängigkeit der von der Auswerteeinheit 20a übertragenen Befehle steuert die Kochfeld-Steuereinheit 22a das Gargeschirr 14a beheizende Heizeinheiten, wodurch eine Temperatur des Gargeschirrs 14a gesteuert wird. Somit wird mittels der Kochfeldvorrichtung 10a eine Temperatur des Gargeschirrs 14a überwacht. Im Falle einer zu hohen oder zu geringen Temperatur wird eine Heizleistung von das Gargeschirr 14a beheizenden Heizeinheiten angepasst. Zudem wird mittels der Bedieneinheit 30a eine Warnung an einen Bediener ausgegeben.

Alternativ oder zusätzlich ist denkbar, dass weitere Funktionen implementiert sind. Beispielsweis eine Ausgabe an den Bediener über eine aktuelle Temperatur des Gargeschirrs und/oder über ein Erreichen einer bestimmten Temperatur und/oder über eine Beendigung eines bestimmten Kochvorgangs, beispielsweise eines Verdampfens von x % eines Alkoholanteils und/oder eines Volumens eines Garguts. Beispielsweise könnten diese Informationen mittels der Bedieneinheit an den Bediener ausgegeben werden. Hierbei könnte die Ausgabeeinheit akustisch und/oder optisch ausgebildet sein. Alternativ könnten diese Informationen mittels einer in dem Gargeschirrhandgriff integrierten Ausgabeeinheit an den Bediener ausgegeben werden.

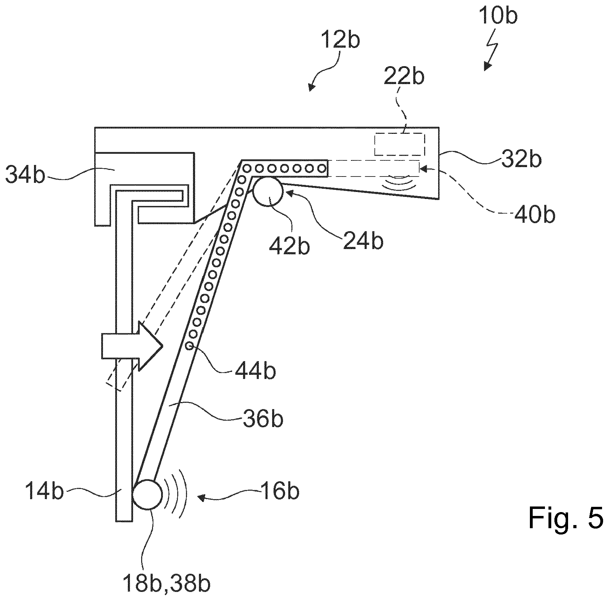

In Fig. 4 und 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 3 verwiesen werden kann. Zur Unterscheidung der Ausführungsbeispiele ist der Buchstabe a in den Bezugszeichen des Ausführungsbeispiels in den Fig. 1 bis 3 durch den Buchstaben b in den Bezugszeichen des Ausführungsbeispiels der Fig. 4 und 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 3 verwiesen werden.

Fig. 4 und Fig. 5 zeigen ein weiteres Ausführungsbeispiel einer erfindungsgemäßen Kochfeldvorrichtung 10b mit einem Gargeschirrhandgriff 12b, der dazu vorgesehen ist, in einem Betriebszustand abnehmbar an einem Gargeschirr 14b befestigt zu sein. Der Gargeschirrhandgriff 12b umfasst eine Sensoreinheit 16b zu einer Detektion einer Garkenngröße des Gargeschirrs 14b. Zudem weist der Gargeschirrhandgriff 12b eine Auswerteeinheit 20b zu einer Auswertung der von der Sensoreinheit 16b detektierten Garkenngröße auf, wobei die Auswerteeinheit 20b zu einer Kommunikation mit einer Kochfeld-Steuereinheit 22b der Kochfeldvorrichtung 10b vorgesehen ist. Die Auswerteeinheit 20b ist teilweise innerhalb eines Trägerbauteils 32b des Gargeschirrhandgriffs 12b angeordnet.

Die Sensoreinheit 16b weist ein verstellbares Sensorelement 18b zu einer Einstellung von zwei verschiedenen Messpositionen auf. Das verstellbare Sensorelement 18b ragt teilweise aus dem Trägerbauteil 32b des Gargeschirrhandgriffs 12b heraus. Die Sensoreinheit 16b weist ein Verbindungselement 36b auf, das dazu vorgesehen ist, das verstellbare Sensorelement 18b mit dem Trägerbauteil 32b zu verbinden. Das Verbindungselement 36b ist im Wesentlichen streifenförmig ausgebildet. Das Verbindungselement 36b ist aus einem im Wesentlichen stabilen und flexiblen Material ausgebildet, wobei das Verbindungselement 36b aus Stahl ausgebildet ist. Das verstellbare Sensorelement 18b weist ein Übertragungselement 38b zu einer Übertragung der Garkenngröße an die Auswerteeinheit 20b auf. Das Übertragungselement 38b ist als ein Sendemodul ausgebildet und zu einer drahtlosen Übermittlung der Garkenngröße vorgesehen. Alternativ ist denkbar, dass das Übertragungselement teilweise innerhalb des Verbindungselements angeordnet und als ein elektrischer Draht ausgebildet ist.

Das verstellbare Sensorelement 18b ist teilweise als Kontaktsensor ausgebildet. Das verstellbare Sensorelement 18b ist an dem Verbindungselement 36b angeordnet. Das verstellbare Sensorelement 18b ist an einem dem Trägerbauteil 32b abweisenden Ende des Verbindungselements 36b an dem Verbindungselement 36b befestigt. Das Verbindungselement 36b weist eine vordefinierte Ausrichtung auf (vgl. gestrichelte Darstellung des Verbindungselements in Fig. 4). Würde das Verbindungselement 36b in befestigtem Zustand, in dem der Gargeschirrhandgriff 12b abnehmbar an dem Gargeschirr 14b befestigt ist, die vordefinierte Ausrichtung beibehalten, so wäre das verstellbare Sensorelement 18b auf einer dem Trägerbauteil 32b gegenüberliegenden Seite einer Seitenwand des Gargeschirrs 14b angeordnet. Hierbei würde das Verbindungselement 36b die Seitenwand des Gargeschirrs 14b schneiden. Mittels der vordefinierten Ausrichtung des Verbindungselements 36b wird das verstellbare Sensorelement 18b gegen das Gargeschirr 14b gedrückt. In einem Betriebszustand ist das verstellbare Sensorelement 18b in einem direkten Kontakt mit dem Gargeschirr 14b angeordnet. Das verstellbare Sensorelement 18b ist in einem Betriebszustand zu dem Trägerbauteil 32b beabstandet angeordnet.

In einer Ausgangsstellung ist das Verbindungselement 36b teilweise innerhalb des Trägerbauteils 32b und teilweise außerhalb des Trägerbauteils 32b angeordnet. Der Gargeschirrhandgriff 12b umfasst einen Hohlraum 40b, in dem das Verbindungselement 36b in dem Trägerbauteil 32b gelagert ist. Der Hohlraum 40b bildet eine Lauffläche des Verbindungselements 36b aus. Das Verbindungselement 36b ist beweglich in dem Trägerbauteil 32b gelagert. Die Kochfeldvorrichtung 10b umfasst eine Getriebeeinheit 24b, die dazu vorgesehen ist, eine Einstellkraft in eine Bewegung des Verbindungselements 36b und damit des verstellbaren Sensorelements 18b zu übertragen. Die Getriebeeinheit 24b weist ein Einstellelement 42b zu einer Einstellung der Einstellkraft auf. Das Einstellelement 42b ist im Wesentlichen rund ausgebildet. Das Einstellelement 42b ist im Wesentlichen als Zahnrad ausgebildet. Alternativ könnte das Einstellelement als ein elektrisches Bauteil und/oder als ein von einem Zahnrad verschiedenes mechanisches Bauteil ausgebildet sein. Die Getriebeeinheit 24b ist teilweise einstückig mit dem Einstellelement 42b ausgebildet.

Die Getriebeeinheit 24b ist dazu vorgesehen, von einem Bediener betätigt zu werden. Die Getriebeeinheit 24b ragt teilweise aus dem Trägerbauteil 32b heraus, um von einem Bediener betätigbar zu sein. Die Getriebeeinheit 24b ist zu einer Übertragung einer Einstellkraft in eine Bewegung des verstellbaren Sensorelements 18b vorgesehen. Das Verbindungselement 36b weist Strukturelemente 44b auf, die mit der Getriebeeinheit 24b in Eingriff stehen. Die Strukturelemente 44b sind als Ausnehmungen und das Einstellelement 42b ist als zu den Ausnehmungen korrespondierendes Zahnrad ausgebildet. Alternativ könnten die Strukturelemente als Wölbungen ausgebildet sein, wobei das Einstellelement zu den Wölbungen korrespondierende Ausnehmungen aufweisen könnte. Mit einem im Wesentlichen innerhalb des Trägerbauteils 32b angeordneten Teilbereich steht die Getriebeeinheit 24b in Eingriff mit den Strukturelementen 44b des Verbindungselements 36b. Mittels einem Eingriff der Strukturelemente 44b, die beispielsweise eine ovale und/oder rechteckige Gestalt aufweisen können, und der Getriebeeinheit 24b ist eine Einstellkraft in eine Bewegung des Verbindungselements 36b und damit des verstellbaren Sensorelements 18b übertragbar.

In einem Verfahren zu einem Betrieb der Kochfeldvorrichtung 10b wird bei einer Betätigung des Einstellelements 42b in einer ersten Richtung das verstellbare Sensorelement 18b ausgehend von einer ersten Messposition (vgl. Fig. 4) in eine zweite Messposition (vgl. Fig. 5) bewegt. Wird das Einstellelement 42b in einer zweiten Richtung, die entgegen der ersten Richtung ausgerichtet ist, betätigt, so wird das Einstellelement 42b von der zweiten Messposition zurück in die erste Messposition bewegt. Alternativ ist denkbar, dass die Getriebeeinheit ein Auslöseelement aufweist, das im Falle einer Betätigung das Verbindungselement in eine Ausgangsstellung innerhalb des Trägerbauteils bewegt. Somit ist eine Einstellung von Messpositionen des verstellbaren Sensorelements 18b reversibel.

Ebenfalls denkbar ist, dass die Sensoreinheit mehrere Sensorelemente aufweist, wobei die Sensoreinheit beispielsweise mehrere Infrarotsensoren und/oder mehrere Kontaktsensoren aufweisen könnte.

### Bezugszeichen

- 10: Kochfeldvorrichtung
- 12: Gargeschirrhandgriff
- 14: Gargeschirr
- 16: Sensoreinheit
- 18: Sensorelement
- 20: Auswerteeinheit
- 22: Kochfeld-Steuereinheit
- 24: Getriebeeinheit
- 26: Kochfeld
- 28: Platteneinheit
- 30: Bedieneinheit
- 32: Trägerbauteil
- 34: Kontaktelement
- 36: Verbindungselement
- 38: Übertragungselement
- 40: Hohlraum
- 42: Einstellelement
- 44: Strukturelement

## Patentansprüche

1. Kochfeldvorrichtung mit zumindest einem Gargeschirrhandgriff (12a-b), der dazu vorgesehen ist, in zumindest einem Betriebszustand abnehmbar an zumindest einem Gargeschirr (14a-b) befestigt zu sein und der zumindest eine Sensoreinheit (16a-b) zumindest zu einer Detektion einer Garkenngröße des Gargeschirrs (14a-b) umfasst, **dadurch gekennzeichnet, dass** die Sensoreinheit (16a-b) zumindest ein verstellbares Sensorelement (18a-b) zu einer Einstellung von zumindest zwei verschiedenen Messpositionen aufweist.

2. Kochfeldvorrichtung nach Anspruch 1, **dadurch gekennzeichnet, dass** das verstellbare Sensorelement (18a-b) ein beweglich an dem Gargeschirrhandgriff (12a-b) angeordnetes Sensorelement ist, das dazu vorgesehen ist, in zumindest einem ersten Betriebszustand eine erste Messposition einzunehmen und in zumindest einem zweiten Betriebszustand eine zweite Messposition, die von der ersten Messposition verschieden ausgebildet ist, einzunehmen.

3. Kochfeldvorrichtung nach einem der vorhergehenden Ansprüche, **dadurch gekennzeichnet, dass** der Gargeschirrhandgriff (12a-b) zumindest eine Auswerteeinheit (20a-b) zu einer Auswertung der von der Sensoreinheit (16a-b) detektierten Garkenngröße aufweist.

4. Kochfeldvorrichtung nach Anspruch 3, **dadurch gekennzeichnet, dass** die Auswerteeinheit (20a-b) zu einer Kommunikation mit zumindest einer Kochfeld-Steuereinheit (22a-b) vorgesehen ist.

5. Kochfeldvorrichtung nach einem der vorhergehenden Ansprüche, **dadurch gekennzeichnet, dass** das verstellbare Sensorelement (18a) zumindest teilweise als Infrarotsensor ausgebildet ist.

6. Kochfeldvorrichtung nach einem der vorhergehenden Ansprüche, **dadurch gekennzeichnet, dass** das verstellbare Sensorelement (18b) zumindest teilweise als Kontaktsensor ausgebildet ist.

7. Kochfeldvorrichtung nach einem der Ansprüche 5 oder 6, **dadurch gekennzeichnet, dass** das verstellbare Sensorelement (18a-b) zumindest teilweise aus zumindest einem Trägerbauteil (32a-b) des Gargeschirrhandgriffs (12a-b) herausragt.

8. Kochfeldvorrichtung nach einem der vorhergehenden Ansprüche, **gekennzeichnet durch** zumindest eine Getriebeeinheit (24a-b) zu einer Übertragung einer Einstellkraft in eine Bewegung des verstellbaren Sensorelements (18a-b).

9. Kochfeld mit zumindest einer Kochfeldvorrichtung (10a-b) nach einem der Ansprüche 1 bis 8.

10. Verfahren zum Betrieb einer Kochfeldvorrichtung (10a-b) nach einem der Ansprüche 1 bis 8, mit zumindest einem Gargeschirrhandgriff (12a-b), der dazu vorgesehen ist, in zumindest einem Betriebszustand abnehmbar an zumindest einem Gargeschirr (14a-b) befestigt zu sein und der zumindest eine Sensoreinheit (16a-b) umfasst, wobei eine Garkenngröße des Gargeschirrs (14ab) durch die Sensoreinheit (16a-b) detektiert wird, und wobei die Sensoreinheit (16a-b) zumindest ein verstellbares Sensorelement (18a-b) zu einer Einstellung von zumindest zwei verschiedenen Messpositionen aufweist.

## Claims

1. Hob apparatus with at least one cooking utensil handle (12a-b), which is provided to be fastened to at least one cooking utensil (14a-b) in a detachable manner in at least one operating state and which comprises at least one sensor unit (16a-b) at least for detecting a cooking variable of the cooking utensil (14a-b), **characterised in that** the sensor unit (16a-b) has at least one adjustable sensor element (18a-b) for setting at least two different measuring positions.

2. Hob apparatus according to claim 1, **characterised in that** the adjustable sensor element (18a-b) is a sensor element arranged so that it can be moved on the cooking utensil handle (12a-b), which is provided to occupy a first measuring position in at least one first operating state and to occupy a second position, which is embodied differently from the first measuring position, in at least one second operating state.

3. Hob apparatus according to one of the preceding claims, **characterised in that** the cooking utensil handle (12a-b) has at least one analysis unit (20a-b) for analysing the cooking variable detected by the sensor unit (16a-b).

4. Hob apparatus according to claim 3, **characterised in that** the analysis unit (20a-b) is provided for communicating with at least one hob control unit (22a-b).

5. Hob apparatus according to one of the preceding claims, **characterised in that** the adjustable sensor element (18a) is at least partially embodied as an infrared sensor.

6. Hob apparatus according to one of the preceding claims, **characterised in that** the adjustable sensor element (18b) is at least partially embodied as a contact sensor.

7. Hob apparatus according to one of claims 5 or 6, **characterised in that** the adjustable sensor element (18a-b) protrudes at least partially from at least one carrier component (32a-b) of the cooking utensil handle (12a-b).

8. Hob apparatus according to one of the preceding claims, **characterised by** at least one gear unit (24a-b) for transferring a setting force into a movement of the adjustable sensor element (18a-b).

9. Hob with at least one hob apparatus (10a-b) according to one of claims 1 to 8.

10. Method for operating a hob apparatus (10a-b) according to one of claims 1 to 8, with at least one cooking utensil handle (12a-b), which is provided to be fastened to at least one cooking utensil (14a-b) in a detachable manner in at least one operating state and which comprises at least one sensor unit (16a-b), wherein a cooking variable of the cooking utensil (14a-b) is detected by the sensor unit (16a-b), and wherein the sensor unit (16a-b) has at least one adjustable sensor element (18a-b) for setting at least two different measuring positions.

## Revendications

1. Dispositif de champ de cuisson avec au moins une poignée d'élément de batterie de cuisine (12a-b), prévue afin d'être fixée de manière amovible à au moins un élément de batterie de cuisine (14a-b) dans au moins un état de fonctionnement et qui englobe au moins une unité de capteurs (16a-b) au moins pour une détection d'une grandeur caractéristique de cuisson de l'élément de batterie de cuisine (14a-b), **caractérisé en ce que** l'unité de capteurs (16a-b) présente au moins un élément de capteurs déplaçable (18a-b) pour le réglage d'au moins deux positions de mesure différentes.

2. Dispositif de champ de cuisson selon la revendication 1, **caractérisé en ce que** l'élément de capteurs déplaçable (18a-b) est un élément de capteurs disposé de façon déplaçable sur la poignée d'élément de batterie de cuisine (12a-b), lequel élément est prévu afin d'adopter, dans au moins un premier état de fonctionnement, une première position de mesure et, dans au moins un deuxième état de fonctionnement, une deuxième position de mesure, différente de la première position de mesure.

3. Dispositif de champ de cuisson selon l'une des revendications précédentes, **caractérisé en ce que** la poignée d'élément de batterie de cuisine (12a-b) présente au moins une unité d'évaluation (20a-b) en vue d'une évaluation de la grandeur caractéristique de cuisson détectée par l'unité de capteurs (16a-b).

4. Dispositif de champ de cuisson selon la revendication 3, **caractérisé en ce que** l'unité d'évaluation (20a-b) est prévue pour une communication avec au moins une unité de commande de champ de cuisson (22a-b).

5. Dispositif de champ de cuisson selon l'une des revendications précédentes, **caractérisé en ce que** l'élément de capteurs déplaçable (18a) est au moins partiellement exécuté sous la forme d'un capteur à infrarouges.

6. Dispositif de champ de cuisson selon l'une des revendications précédentes, **caractérisé en ce que** l'élément de capteurs déplaçable (18b) est au moins partiellement exécuté sous la forme d'un capteur de contact.

7. Dispositif de champ de cuisson selon l'une des revendications 5 ou 6, **caractérisé en ce que** l'élément de capteurs déplaçable (18a-b) fait au moins partiellement saillie d'au moins un composant support (32a-b) de la poignée d'élément de batterie de cuisine (12a-b).

8. Dispositif de champ de cuisson selon l'une des revendications précédentes, **caractérisé par** au moins une unité de transmission (24a-b) pour la transposition d'une force de réglage en un déplacement de l'élément de capteurs déplaçable (18a-b).

9. Champ de cuisson avec au moins un dispositif de champ de cuisson (10a-b) selon l'une des revendications 1 à 8.

10. Procédé d'exploitation d'un dispositif de champ de cuisson (10a-b) selon l'une des revendications 1 à 8, avec au moins une poignée d'élément de batterie de cuisine (12a-b), prévue afin d'être fixée de manière amovible à au moins un élément de batterie de cuisine (14a-b) dans au moins un état de fonctionnement et qui englobe au moins une unité de capteurs (16a-b), une grandeur caractéristique de cuisson de l'élément de batterie de cuisine (14a-b) étant détectée par l'unité de capteurs (16a-b) et dans lequel l'unité de capteurs (16a-b) présente au moins un élément de capteurs déplaçable (18a-b) pour le réglage d'au moins deux positions de mesure différentes.
